# EUROPEAN PATENT SPECIFICATION

(11) **EP 2 046 846 B1**
(45) Date of publication and mention of the grant of the patent: **25.05.2011**
(21) Application number: 07787787.6
(22) Date of filing: 20.07.2007
(51) Int. Cl.: C08F 297/08, C08L 23/10, C08F 210/06

(54) **GAS-PHASE PROCESS FOR PREPARING HETEROPHASIC PROPYLENE COPOLYMERS**
GASPHASENVERFAHREN ZUR HERSTELLUNG VON HETEROPHASIGEN PROPYLENCOPOLYMEREN
PROCÉDÉ EN PHASE GAZEUSE POUR PRÉPARER DES COPOLYMÈRES HÉTÉROPHASIQUES DE PROPYLÈNE

(30) Priority: 04.08.2006 EP 06118457
(43) Date of publication of application: 15.04.2009
(73) Proprietor: Basell Poliolefine Italia S.r.l., 20124 Milano (IT)
(72) Inventor: GOVONI, Gabriele, I-44045 Renazzo (IT); COVESSI, Massimo, 44100 Ferrara (IT); PENZO, Giuseppe, I-46047 Montanara di Curtatone, Mantova (IT); CIARROCCHI, Antonio, I-44100 Ferrara (IT); DE LUCIA, Antonio, 50676 Köln (DE)
(74) Representative: Sacco, Marco
(86) International application number: PCT/EP2007/057539
(87) International publication number: WO 2008/015113

(56) References cited:
- EP-A- 0 395 083
- EP-A- 0 640 649
- EP-A- 1 279 699
- WO-A-92/21706

## Description

The present invention relates to a process and apparatus for the gas-phase polymerization of propylene, particularly to a gas-phase polymerization process for the preparation of heterophasic propylene copolymers. The obtained propylene copolymers are particularly suitable for producing items endowed with a wide range of useful properties, such as impact strength, transparency, gloss, stiffness, shrinkage, etc.

It is known that crystalline propylene polymers are characterized by poor impact resistance (resilience) and flexibility. However, these properties can be remarkably improved by blending an amorphous ethylene-propylene copolymer with a crystalline propylene homopolymer, thus obtaining polyolefin blends denominated "heterophasic propylene copolymers".

A process for preparing such polyolefin blends involves the intimate mixing of the individual polymeric components by means of melt extrusion in an extruder or kneader. According to this technique, the individual polymeric components of the blend are separately obtained and discharged as a polymer powder from the polymerization reactors. The solid polymer granules are then fed to an extruder or kneader, where they are subjected to heating and melting to favour their physical blending inside the extruder or kneader. Of course, an intensive and energetic mixing action is required to achieve the mutual dispersion of a first polymer component in a second component, so as to obtain the desired polymeric blends. A disadvantage of this technique is due to the fact that generally the melt viscosities of the individual polymer components to be blended are remarkably different: it is therefore particularly difficult mixing the two components in a homogeneous way. In addition, the high temperatures generally required during the mixing phase can thermally degrade one of the polymer components.

An alternative process for the preparation of heterophasic propylene copolymers is referred to as the "in situ blending of polymers", which allows avoiding the disadvantages associated with the physical blending. According to this technique, a semicrystalline component (propylene homopolymer) is prepared in a first polymerization reactor and the obtained polymer granules are then transferred to a successive polymerization reactor, wherein an elastomeric component (for instance, a propylene-ethylene copolymer) is formed: polymer blends are therefore prepared by means of a sequential polymerization in two or more reactors arranged in series. As a consequence, the mixing of polymer components of different molar mass distribution and/or chemical composition takes place within the polymer granules during the polymerization stage. This multistage polymerization process can be also operated by feeding different catalytic systems in each polymerization reactor.

Tailoring the process conditions in the sequence of serially connected polymerization reactors, it is possible to produce a wide range of heterophasic propylene copolymers, as well as different concentrations of semicrystalline component and amorphous component. In fact, each reactor can work at different polymerization conditions, in terms of catalyst, pressure, temperature, amounts of comonomer(s) and molecular weight regulator(s).

The disclosure of EP 541760 relates to a process for the gas-phase polymerization of olefins in the presence of a highly active catalyst comprising a titanium compound supported on Mg halide. The precontacting step of the Ziegler-Natta catalyst components may be carried out also in the presence of the olefin monomer in an amount up to 3 g per g of solid catalyst component. The catalyst, after a prepolymerization treatment, is fed to a sequence of one or more gas-phase reactors, the polymerization being carried out in the presence of a C₃-C₅ alkane in a molar concentration from 20 to 90% with respect to the total amount of gases: propane is used as the preferred alkane. The precontact of the catalyst components, the prepolymerization treatment and the presence of the alkane in the gas-phase in the molar concentration as indicated above, permits close control of the gas-phase polymerization process and the preparation of ethylene and propylene polymers in the form of high flowability spherical particles, also preventing the formation of large aggregates (chunks) inside the gas-phase reactor.

EP 640 649 discloses a process for producing a polyolefin composition having a good balance of flexural modulus and impact strength, the composition comprising:
A) 30-60% of a propylene homopolymer or copolymer soluble in xylene at ambient temperature in a percentage lower than 5%;
B) 14-30% of a fraction consisting of copolymers of propylene with ethylene, said fraction being soluble in xylene at ambient temperature in a percentage ranging from 60 to 99%;
C) 10-25% of a copolymer of ethylene with a C3-C8 alpha-olefin in a quantity ranging from 10% to 30%, said copolymer being soluble in xylene at ambient temperature in a percentage ranging from 10 to 50%;
D) 5-45% of a mineral filler in a particle form having an average diameter from 0.1 to 5.0 µm. According to the working examples a Ziegler-Natta catalyst component, a triethyl-aluminum (TEAL) activator and a dicyclopentyl-dimethoxysilane electron donor are precontacted at 0°C for some minutes. The catalyst is then prepolymerized in a reactor containing liquid propylene and the obtained prepolymer is then introduced into the first polymerization reactor. The polymerization is carried out in continuous in a sequence of three gas-phase reactors, each one for producing the above mentioned polymeric components A), B), and C), in the presence of the polymer and the catalyst coming from the preceding stage. The mineral filler D) is successively added by blending.

WO 00/26295 relates to polyolefin compositions with satisfactory mechanical properties and optical properties, such as low values of gloss, said compositions comprising (percentage by weight):
A) from 40 to 60% of a broad molecular weight distribution propylene polymer having a polydispersity index from 5 to 15 and a melt flow rate (MFR) from 80 to 200 g/10 min;
B) from 40 to 60% of a partially xylene-soluble olefin polymer rubber containing at least 65% by weight of ethylene.

Component A) is a crystalline propylene homopolymer or an ethylene/propylene copolymer with an ethylene content from 0.5 to 1.5% by weight. After the precontact with a triethylaluminum (TEAL) activator and a dicyclopentyl-dimethoxysilane electron donor, the catalyst is prepolymerized in a reactor containing liquid propylene. The prepolymer is then introduced into a first gas-phase reactor to prepare propylene homopolymers with low MFR, while homopolymers with a high MFR are prepared in the 2^{nd} gas-phase reactor. Finally, ethylene is copolymerized with propylene to prepare component B) in the 3^{rd} reactor.

In any gas-phase polymerization aimed to prepare heterophasic copolymers with a relevant amount of rubbery phase an important physical parameter is the porosity of the semicrystalline component, generally indicated with the term "matrix" and prepared in the first gas-phase reactor. In fact, higher is the porosity of the matrix, higher is the amount of elastomeric component that can be incorporated inside the polymer particles formed in the first polymerization step. On the other hand, if the porosity of the matrix is poor, the presence of an excessive amount of rubbery fraction on the particles surface increases considerably the tackiness of the polymer particles with consequent agglomeration phenomena between the contiguous particles during the preparation of the rubbery fraction. The polymer can also adhere to the walls of the polymerization apparatus or clogging the discharge line: the polymerization process must be interrupted.

An important macroscopic measurement of the polymer porosity is given by the polymer bulk density. The bulk density or apparent density is the mass per unit of volume of a material, including voids inherent in the material of interest: low values of bulk density indicate a high porosity of the polymer powder.

The disclosure and working examples of the above cited prior art patents fail in teaching the operative conditions useful to minimize the bulk density of the semi-crystalline matrix prepared in first polymerization step.

It would be largely desirable to be able of tuning the bulk density of the semi-crystalline matrix without making significant changes in the polymerization conditions of the first polymerization step.

The Applicant has surprisingly found that a proper selection of operative conditions in the steps of pre-contact and prepolymerization of the catalyst components directly affects the bulk density of the semi-crystalline matrix prepared in the first reactor, so that the degree of porosity of said matrix can be suitably adjusted at the targeted value.

It is therefore a first object of the present invention a polymerization process for preparing heterophasic propylene copolymers in two or more gas-phase reactors connected in series, in the presence of a polymerization catalyst comprising a catalytic components based on a titanium compound supported on magnesium halide, the process comprising the following steps:
(**A**) contacting said catalytic component with an organo-Al compound, an external donor compound, optionally in the presence of propylene, at a temperature from 5°C to 30°C and a weight ratio propylene/(catalytic component) ranging from 0 to 2.0;
(**B**) preρolymerizing the catalyst from A) with propylene, optionally in the presence of an inert hydrocarbon solvent;
(**C**) polymerizing propylene, optionally with an another α-olefin comonomer in an amount lower than 15% by weight, to prepare a semicrystalline polymer component;
(**D**) successively copolymerizing two or more alpha-olefin comonomers C₂-C₁₀ to prepare one or more olefin copolymers having a solubility in xylene higher than 15% by weight;
in which process the poured bulk density of the semi-crystalline component of step C) is adjusted at a value lower than 0.40 g/cm³ selecting the operative conditions in step A) in such a way that:
- the poured bulk density of said semi-crystalline matrix is decreased by increasing the temperature in step A);
- the poured bulk density of said semi-crystalline matrix is decreased by decreasing said weight ratio propylenel(catalytic component) in step A).

The process according to the present invention allows obtaining from step C) a semi-crystalline homopolymer or random copolymer based on polypropylene, while one or more amorphous rubbery copolymers are prepared in step D). In particular, the final blend obtained from the sequence of polymerization reactors comprises one or more rubbery fractions produced in step D), intimately mixed and dispersed into the semi-crystalline matrix prepared in the polymerization step C).

The main advantage of the present invention is that the bulk density of the semi-crystalline component obtained in the polymerization step C) can be adjusted at the targeted value lower than 0.40 g/cm³, preferably comprised in the range from 0.25 g/cm³ to 0.35 g/cm³, without any modification of the operative conditions in the polymerization step C). As above explained, lower is the bulk density of the semi-crystalline matrix, higher is the amount of rubbery phase which can be incorporated inside the polymer granules of the matrix, so that heterophasic copolymers with a different content of rubbery fraction and a wide range of final properties can be obtained by the process of the invention.

The results of extensive investigations performed by the Applicant have demonstrated that it is possible to adjust the bulk density of the matrix prepared in step C) according to the following guidelines:
(**1**) The bulk density of the semi-crystalline matrix may be decreased by increasing the temperature in the precontacting step A);
(**2**) The bulk density of the semi-crystalline matrix may be decreased by decreasing the weight ratio propylene/(catalytic component) in the precontacting step A).

The polymerization process of the present invention is carried out in the presence of a Ziegler-Natta catalyst system. This type of polymerization catalyst comprises a solid catalytic component based on a titanium compound supported on magnesium halide.

Preferred titanium compounds are those of formula Ti(OR)ₙX_{y-n} in which n is comprised between 0 and y; y is the valence of titanium; X is halogen and R is a hydrocarbon group having 1-10 carbon atoms or a COR group. Among them, particularly preferred are titanium compounds having at least one Ti-halogen bond such as titanium tetrahalides or halogenalcoholates. Preferred specific titanium compounds arc TiCl₃, TiCl₄, Ti(OBu)₄, Ti(OBu)Cl₃, Ti(OBu)₂Cl₂, Ti(OBu)₃Cl.

Particularly suitable Ziegler-Natta catalysts for the prperation of heterophasic propylene copolymers arc those wherein the titanium compound is supported together with an internal electron donor compound on MgCl₂. Among internal electron donor compounds, those selected from esters, ethers, amines, and ketones are the preferred. Particularly preferred examples of internal electron donors are alkyl esters, cycloalkyls and aryls of polycarboxylic acids, such as phthalic and succininc esters and ethers, such as those described in EP-A 45977. Preferably electron donor include mono or disubstituted phthalates wherein the substituents is a linear or branched C₁₋₁₀ alkyl, C₃₋₈ cycloalkyl, or aryl radical, such as for instance diisobutyl, di-n-butyl, and di-n-octyl phthalate.

It has been found that in order to prepare the semi-crystalline component of step (C) with the desired bulk density it is preferred to employ the ZN catalysts of the type disclosed in EP 395083. These catalyst components having particular morphological properties, are obtained from adducts of magnesium chloride with alcohols containing generally 3 moles of alcohol per mole of MgCl₂, which are prepared by emulsifying, in the molten state, the adduct in an inert hydrocarbon liquid immiscible with the melted adduct, then cooling the emulsion very rapidly in order to cause the solidification of the adduct in the form of spherical particles. The resultant particles are then subjected to partial dealcoholation using a heating cycle at temperature increasing from 50°C to 130°C until the alcohol content is decreased from 3 to about 0.5-1.5 moles per mole of MgCl₂.

The adduct thus obtained is then reacted with TiCl₄ one or more times at a temperature of from 80°C to 135°C, at least one time of which in the presence of an internal electron donor compound mentioned above. The resulting solid is then washed with heptane or hexane and then dried. The catalyst components obtained by this method are generally endowed with the following characteristics:
- spherical or spheroidal morphology
- surface area up 100 m² /g;
- porosity (nitrogen) comprised between 0.2 and 0.4 cm³/g;
- porosity (Hg) comprised between 0.5 and 1 cm³/g with the exclusion of macropores (pores having diameter > 10000 Å).

### Precontacting - step A)

According to the invention the above solid catalytic component is pre-contacted for a time from 4 to 30 minutes with an organo-aluminum compound as the cocatalyst, and an external donor compound.

The temperature can range from 5 to 30°C, preferably from 10 to 25C°, while the propylene/(catalytic component) ratio ranges from 0 to 2.0, preferably from 0.5 to 1.3. Preferred organo-Al compounds are Aluminum-alkyl compounds. The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as AlEt₂Cl and Al₂Et₃Cl₃ optionally in mixture with said trialkyl aluminum compounds.

In order to obtain an isotactic propylene (co)polymer from the polymerization step C), it is advisable to use, besides the electron-donor present in the solid catalytic component, an external electron-donor (ED) added to the aluminium alkyl co-catalyst in Step A). These external electron donors can be selected among alcohols, glycols, esters, ketones, amines, amides, nitriles, alkoxysilanes and ethers.

The above catalyst system shows, in addition to a high polymerization activity, also good morphological properties that make them particularly suitable for the use in the gas-phase polymerization process of the invention.

### Prepolymerization - step B)

The prepolymerization treatment is generally carried out in a liquid medium in whatever type of reactor. Therefore, continuous stirred tank reactors (CSTR) as well as loop reactors can be used for contacting the olefin monomers with the polymerization catalyst system. However, the prepolymerization is preferably carried out in a loop reactor or in a sequence of two loop reactors.

The liquid medium of step B) comprises liquid propylene, optionally together with an inert hydrocarbon solvent: the weight ratio (hydrocarbon solvent)/propylene can range from 0 to 7.0, preferably from 0.4 to 2.5. Said hydrocarbon solvent can be either aromatic, such as toluene, or aliphatic, such as propane, hexane, heptane, isobutane, cyclohexane and 2,2,4-trimethylpentane. The use of an alkane as the hydrocarbon solvent is preferred, with the advantage of giving a further process parameter (alkane/propylene ratio) having an influence on the bulk density of the matrix of step C).

The prepolymerization step b) is preferably carried out in the absence of any molecular weight regulator, such as hydrogen. Alternatively, in some cases hydrogen can be fed to the prepolymerization reactor, thus tailoring the intrinsic viscosity of the prepolymer obtained from step b) in a range between 0.2 and 6.0 dl/g.

The average residence time in step b) of the invention is the ratio between the volume of the prepolymerization reactor and the volumetric rate of the polymeric slurry discharged from said reactor. This parameter generally ranges from 20 to 150 minutes, preferably from 30 to 80 minutes.

The operating temperature in step b) generally ranges from 10 to 40°C and a preferred range is comprised between 20 and 30°C. The polymerization degree of the prepolymerized catalyst system generally ranges from 50 to 400 g per gram of solid catalyst component, preferably from 100 to 300 g per gram of solid catalyst component. A polymeric slurry containing the prepolymerized catalyst system is discharged from the prepolymerization reactor and is continuously fed to the polymerization step C).

### Polymerization step C)

The polymerization steps C) and D) of the present invention are carried out in gas-phase reactors, preferably in a sequence of two or more fluidized bed reactors.

In the fluidized bed reactor of step C) propylene is polymerized to give the semi-crystalline matrix. A gaseous mixture comprising propylene, optional comonomer, hydrogen as molecular weight regulator, and an inert gas is fed to the gas-phase reactor. Limited amounts of olefin comonomers may be also fed to step C), on condition that the obtained semi-crystalline polypropylene component has a solubility in xylene at ambient temperature lower than 10% by weight, preferably lower than 6%: the total amount of comonomers incorporated in the semi-crystalline matrix should be less than 10% by weight, preferably less than 5% by weight. The preferred comonomers are ethylene, 1-hexene, 1-octene.

The operating temperature is selected between 50 and 120°C, preferably between 60 and 85°C, while the operating pressure is between 1.0 and 3.0 MPa, preferably between 1.4 and 2.5 MPa.

The hydrogen/propylene molar ratio is generally comprised between 0.0002 and 0.7, the propylene monomer being comprised from 10% to 100 % by volume, preferably from 30 to 70% by volume, based on the total volume of the gases present in the reactor. The remaining portion of the feeding mixture is comprised of inert gases and one or more α-olefin comonomers, if any. Inert gases useful to dissipate the heat generated by the polymerization reaction are conveniently selected from nitrogen or preferably saturated light hydrocarbons, the most preferred one being propane.

Inert gases are also used for adjusting the production split in the overall polymerization process, i.e. in the sequence of serially connected gas-phase reactors of step C) and D). In fact, the respective amounts of inert gases used in step C) and D) considerably influence the production split achieved in these polymerization steps. The semi-crystalline matrix from step C) represents from 15 to 90% by weight, more commonly from 20 to 60% by weight, of the heterophasic copolymer produced in the overall process.

### Polymerization Step D)

The semi-crystalline matrix and the entrained gas discharged from the polymerization step C) are transferred to the polymerization step D). The polymer powder is generally passed through a solid/gas separation step, in order to prevent the gaseous mixture discharged by the first reactor from entering the gas-phase reactor of step D). The gaseous mixture is separated and recycled back to the first polymerization reactor, while the polymer particles are fed to the polymerization step D).

Step D) is carried out in one or more gas-phase reactors, preferably fluidized bed reactors, to prepare one or more olefin copolymers partially soluble in xylene at ambient temperature in a percentage higher than 15% by weight, preferably from 40 to 95% by weight. Said plastomeric or elastomeric copolymers may be selected from:
- copolymers of ethylene/propylene, ethylene/1-butene, ethylene/1-hexene;
- copolymers of propylene/1-butene, propylene/1-hexene;
- terpolymers of ethylene, propylene and α-olefin C₄-C₁₂.

Preferably, copolymers of ethylene with propylene and/or 1-butene are prepared in step D) of the invention.

According to a first preferred embodiment of the invention, the polymerization step D) consists of a single fluidized bed reactor, wherein a copolymer of ethylene with propylene and/or 1-butene is prepared, said copolymer containing from 10 to 80% by weight of ethylene.

According to an alternative preferred embodiment of the invention, the polymerization step D) comprises a sequence of two fluidized bed reactors, so that two distinct ethylene copolymers with a different ethylene/comonomer composition can be prepared.

The final heterophasic copolymer, discharged from the polymerization step D) is the polymer deriving from the sequential polymerization in the reactors of step C) and step D). When different ethylene concentrations are established in the polymerization reactors of step D), the process of the present invention allows to bond a more amorphous elastomeric component with a less amorphous elastomeric component, simultaneously providing an efficient dispersion of said two elastomeric components into the crystalline matrix produced in the first polymerization step C).

Depending on the operative conditions selected in the above defined steps from A) to D), the heterophasic propylene copolymers obtained by means of the present invention can be used in a wide range of applications due to the high versatility of the claimed process. Main advantages are achieved in the following fields:
- roofing/geomembranes/bitumen in view of the optimal balance of fluidity, softness, weldability;
- automotive in view of the optimal balance of stiffness, impact resistance, shrinkage, fluidity;
- injection molding in view of the optimal balance of fluidity, impact resistance, stiffness, transparency.

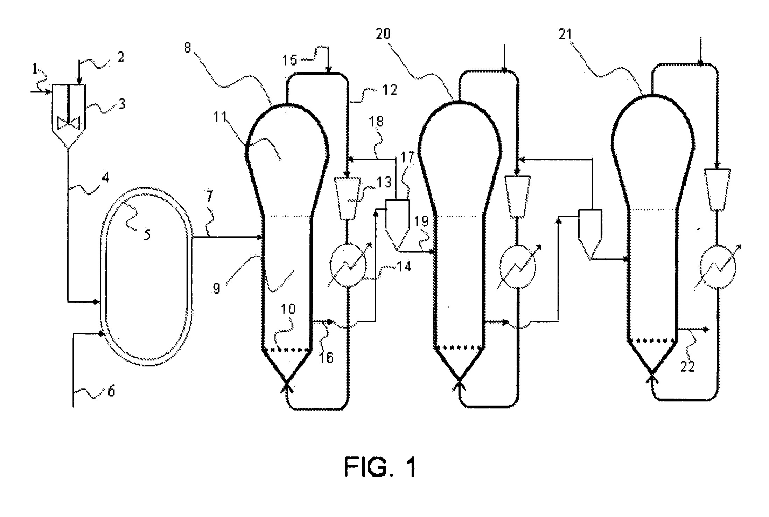

The present invention will be now described in detail with reference to Figure 1, which is illustrative and not limitative of the scope of the present invention.

According to the embodiment shown in Fig. 1 the precontacting step A) is carried out in a continuously stirred tank, while the prepolymerization of the catalyst system (step b) is carried out in a liquid-phase loop reactor. The polymerization steps C) and D) are carried out in a sequence of three serially connected gas-phase reactors.

A solid catalyst component 1, a stream 2 containing the cocatalyst and an external donor compound, optionally in the presence of propylene, are fed to a pre-contacting vessel 3 together with a diluent, such as propane. These components are contacted in the vessel 3 according to the operating conditions above-stated for step A).

The obtained catalyst system is continuously fed via line 4 to a loop prepolymerization reactor, and simultaneously liquid propylene is fed to the loop reactor 5 via line 6, optionally together with an alkane, such as propane.

The prepolymerized catalyst system discharged from the loop reactor 5 is fed via line 7 to a first fluidized bed reactor 8, wherein the semi-crystalline polymer component according to the process of the invention is prepared.

The fluidized bed reactor 8 of Fig. 1 comprises a fluidized bed 9 of growing polymer particles, a fluidization plate 10 and a velocity reduction zone 11. The velocity reduction zone 11 is generally of increased diameter compared to the diameter of the fluidized bed portion of the reactor. The gaseous stream leaving the top of the velocity reduction zone 11 is transferred via the recycle line 12 to a compressor 13 and then to a heat exchanger 14. The recycle line 12 is equipped with a line 15 for feeding propylene, hydrogen, inert gases and, optionally comonomers. Passing through the heat exchanger 14, the gaseous stream is cooled and then fed to the bottom of the fluidized bed reactor 8. In this way the upwardly flowing gas continuously maintains the bed of polymer particles in fluidization conditions.

The polymer obtained in step C) is discharged from the lower part of the fluidized bed 9 and is fed via line 16 to a solid/gas separator 17, in order to avoid the gaseous mixture coming from the first polymerization reactor from entering the reactor of step D). Said gaseous mixture is fed back to the recycle line 12 through line 18, while the separated polymer is fed via line 19 to the first fluidized bed reactor 20 of step D).

According to the embodiment given in Fig. 1 the polymerization step D) is carried out in the sequence of fluidized bed reactors 20 and 21, which can be used to prepare two distinct rubbery fractions having a different content of ethylene. The reactors 20 and 21 have the same structural arrangement already explained in connection with the first fluidized bed reactor 8. The heterophasic propylene copolymer obtained by the process of the invention is hence withdrawn via the discharge line 22 from the last fluidized bed reactor 21.

The following examples will further illustrate the present invention without limiting its scope.

### EXAMPLES

### Characterization

| | |
|---|---|
| **Poured Bulk Density (PBD) [g/cm³]:** | measured according to DIN-53194 |
| **Melt index L (MIL) [dg/min]:** | measured according to ISO 1133 |
| **Flexural elasticity modulus (MEF) [MPa]:** | measured according to ISO 178 |
| **IZOD at 23°C [kJ/m²]:** | measured according to ISO 180 |
| **Hardness Shore D [°]:** | measured according to ISO 2039 |
| **Gloss 60° [%]:** | measured according to ASTM D523 |

### Solubility index (XS) [wt%]

The following method is used to determine the percent of homopolymer or copolymer polypropylene soluble in ortho-xylene at 25°C.

A weighed amount of sample is dissolved in ortho-xylene at 135°C: the solution is cooled under controlled conditions and maintained at 25°C so that the insoluble material precipitates. The precipitate is then filtered, and after filtration an aliquot of filtered solution is evaporated and weighed (total solubles).

### Intrinsic viscosity of xylene soluble fraction (IVXS) [dl/g]

The intrinsic viscosity is a function of the hydrodynamic volume of a polymer in solution and for linear polymers of known structure is connected to the molecular weight. The test is performed on a weighed amount of a polymer sample dissolved in tetrahydronaphtalene at 135°C. The flow time of this diluted solution is determined in a suitable viscosimeter maintained at 135°C.

### EXAMPLES 1-3

### General polymerization conditions

The polymerization is carried out in continuous by means of a process setup comprising:
- 1.5 liter vessel for the pre-contact of the catalyst components;
- a loop prepolymerization reactor having a volume of 80 liters;
- a sequence of two serially connected fluidised bed reactors, each having a volume of 1.5 m³.

### Example 1

### Precontacting - Step A)

A Ziegler-Natta catalyst system was used as the polymerization catalyst, comprising:
- a titanium solid catalyst component prepared with the procedure described in EP 395 083, Example 3, according to which diisobutyl phthalate is used the internal donor compound. The Hg porosity of this component was 0.66 cm³/g;
- triethylaluminium (TEAL) as the cocataly st;
- dicyclopentyldimethoxysilane (DCPMS) as the external donor.

The above solid catalyst component (hereinafter referred as the "sol.cat.") is fed to the pre-contacting vessel, the weight ratio TEAL/sol.cat being of 5, the weight ratio TEAL/DCPMS being of 5.

Propylene was also introduced into the pre-contacting vessel at a weight ratio propylene/sol.cat of 1.0. The above components were pre-contacted at a temperature of 25°C for 10 minutes.

### Prepolymerization - Step B)

The catalyst system withdrawn from the pre-contacting vessel was continuously fed to the prepolymerization loop reactor together with a liquid stream of propylene and propane. The prepolymerization in the loop reactor is operated with a ratio C₃H₈/C₃H₆ of 1.28, at a temperature of 20°C and a residence time of 30 minutes. The prepolymeration yield is of about 200 g per gram of solid catalyst component.

A polypropylene slurry is continuously discharged from the loop reactor and is fed to the first fluidized bed reactor to carry out the polymerization step C) of the present invention.

Table 1 shows the operative parameters in the precontacting and prepolymerization steps, which are able to adjust the poured bulk density (PBD) of the semi-crystalline matrix prepared in the polymerization step C), according to the teaching given in the present invention.

### Polymerization - Step C)

In the first gas-phase reactor propylene was polymerized using H₂ as the molecular weight regulator and in the presence of propane as inert diluent. No comonomer was fed to this reactor. Make-up propane, propylene and hydrogen as molecular weight regulator were fed to this reactor. The polymerization was carried out at a temperature of 80°C and at a pressure of 2.0 MPa.

The composition of the gas phase in the fluidized bed reactor is specified in Table 1, as well as the production split (% wt) of the 1^{st} reactor and some properties of the obtained semi-crystalline matrix. It can be seen from Table 1 that the polypropylene resin had a poured bulk density of 0.322 g/cm³ and a fraction soluble in xylene of 2.3% by weight. The split of the first polymerization reactor was 60% by weight.

The obtained semi-crystalline was continuously discharged from the first reactor, separated from propylene and propane by means of a gas/solid separator, and then introduced into a second fluidized bed reactor.

### Polymerization - Step D)

An ethylene/propylene copolymer is prepared in a second fluidized bed reactor according to the operative conditions shown in Table 2. The rubbery copolymer obtained in step D) is characterized by solubility in xylene of 68% by weight.

The heterophasic propylene copolymer deriving from the above sequential polymerization is continuously discharged from the second gas-phase reactor.

In Table 3 some structural properties (MIL, XS, IVXS, C₂H₄ content) and some mechanical properties (IZOD, flexural modulus) of this heterophasic copolymer are indicated. The optimal balance of the mechanical properties makes this heterophasic copolymer suitable to be used to produce items in the automotive field.

### - EXAMPLE 2

### Precontacting - Step A)

The same Ziegler-Natta catalyst system of Example 1 was used as the polymerization catalyst. The catalyst components were introduced into the pre-contacting vessel together with propylene, at a weight ratio propylene/sol.cat of 1.0. The above components were pre-contacted at a temperature of 155°C for 10 minutes.

### Prepolymerization - Step B)

The catalyst system withdrawn from the pre-contacting vessel was continuously fed to the prepolymerization loop reactor together with a liquid stream of propylene and propane. As shown in Table 1 the prepolymerization is performed with the same operative conditions of example 1 (C₃H₈C₃H₆ ratio, temperature, residence time).

A polypropylene slurry is continuously discharged from the loop reactor and is fed to the first fluidized bed reactor to carry out the polymerization step C) of the present invention.

### Polymerization - Step C)

In the first gas-phase reactor propylene was polymerized using H₂ as the molecular weight regulator and in the presence of propane as inert diluent. No comonomer was fed to this reactor. Make-up propane, propylene and hydrogen as molecular weight regulator were fed to this reactor. The polymerization was carried out at a temperature of 80°C and at a pressure of 2.0 MPa.

The composition of the gas phase in the fluidized bed reactor is specified in Table 1, as well as the production split (% wt) and some properties of the obtained semi-crystalline matrix. It can be seen from Table 1 that the polypropylene resin had a poured bulk density of 0.340 g/cm³ and a fraction soluble in xylene of 2.0% by weight. The split of the first polymerization reactor was 70% by weight.

As demonstrated by the comparison with Example 1, the other conditions being equal in step A) and B), a decrease of temperature in step A) leads to an increase of the poured bulk density of the semi-crystalline matrix prepared in step C).

The obtained semi-crystalline matrix was continuously discharged from the first reactor, separated from propylene and propane by means of a gas/solid separator, and then introduced into a second fluidized bed reactor.

### Polymerization - Step D)

An ethylene/propylene copolymer is prepared in a second fluidized bed reactor according to the operative conditions shown in Table 2. The rubbery copolymer prepared in step D) is characterized by solubility in xylene of 80% by weight.

The heterophasic propylene copolymer deriving from the above sequential polymerization is continuously discharged from the second gas-phase reactor.

In Table 3 some structural properties (MIL, XS, IVXS, C₂H₄ content) and some physical properties (IZOD, flexural modulus, shrinkage) of this heterophasic copolymer are indicated.

The optimal values of shrinkage and the balance of IZOD/flexural modulus make this heterophasic copolymer suitable to be used to produce bumpers in the automotive field.

### EXAMPLE 3

### Precontacting - Step A)

The same Ziegler-Natta catalyst system of Example 1 was used as the polymerization catalyst. The catalyst components were introduced into the pre-contacting vessel together with propylene, at a weight ratio propylene/sol.cat of 0.5. The above components were pre-contacted at a temperature of 25°C for 10 minutes.

### Prepolymerization - Step B)

The catalyst system withdrawn from the pre-contacting vessel was continuously fed to the prepolymerization loop reactor together with a liquid stream of propylene and propane. The prepolymerization is performed with the same operative conditions of example 1 (C₃H₈/C₃H₆ ratio, temperature, residence time).

A polypropylene slurry is continuously discharged from the loop reactor and is fed to the first fluidized bed reactor to carry out the polymerization step C) of the present invention.

### Polymerization - Step C)

In the first gas-phase reactor propylene was polymerized using H₂ as the molecular weight regulator and in the presence of propane as inert diluent. No comonomer was fed to this reactor. Make-up propane, propylene and hydrogen as molecular weight regulator were fed to this reactor. The polymerization was carried out at a temperature of 80°C and at a pressure of 2.0 MPa.

The composition of the gas phase in the fluidized bed reactor is specified in Table 1, as well as the production split (% wt) of the 1^{st} reactor and some properties of the obtained semi-crystalline matrix. It can be seen from Table 1 that the polypropylene resin had a poured bulk density of 0.312 g/cm³ and a fraction soluble in xylene of 2.0% by weight. The split of the first polymerization reactor was 50% by weight.

As demonstrated by the comparison with Example 1, the other conditions being equal in step A) and B), a decrease of the C₃H₆/sol.cat ratio in step A) leads to a decrease of the poured bulk density of the semi-crystalline matrix prepared in step C).

The obtained semi-crystalline was continuously discharged from the first reactor, separated from propylene and propane by means of a gas/solid separator, and then introduced into a second fluidized bed reactor.

### Polymerization - Step D)

An ethylene/propylene copolymer is prepared in a second fluidized bed reactor according to the operative conditions shown in Table 2. The rubbery copolymer produced in step D) is characterized by solubility in xylene of 78% by weight.

The heterophasic propylene copolymer deriving from the above sequential polymerization is continuously discharged from the second gas-phase reactor.

In Table 3 some structural properties (MIL, XS, IVXS, C₂H₄ content) and some physical properties (IZOD, flexural modulus, shrinkage) of this heterophasic copolymer are indicated. The optimal values of shrinkage and the balance of IZOD/flexural modulus make this heterophasic copolymer suitable to be used to produce bumpers in the automotive field.

### EXAMPLES 4-6

### General polymerization conditions

The polymerization is carried out in continuous in the process setup shown in the enclosed Figure 1, comprising:
- 1.5 liter vessel for pre-contacting the catalyst components;
- a loop prepolymerization reactor having a volume of 80 liters;
- a sequence of three serially connected fluidised bed reactors, each having a volume of 1.5 m³.

### EXAMPLE 4

### Precontacting - Step A)

The same titanium solid catalyst component of Example 1 was used as the polymerization catalyst.

The above solid catalyst component (hereinafter referred as the "sol.cat.") is fed to the pre-contacting vessel, the weight ratio TEAL/sol.cat being of 5, the weight ratio TEAL/DCPMS being of 5.

Propylene was also introduced into the pre-contacting vessel at a weight ratio propylene/sol.cat of 1.0. The above components were pre-contacted at a temperature of 20°C for 10 minutes.

### Prepolymerizat.ion - Step B)

The catalyst system withdrawn from the pre-contacting vessel was continuously fed to the prepolymerization loop reactor together with a liquid stream of propylene and propane. The prepolymerization in the loop reactor is operated with a ratio C₃H₈/C₃H₆ of 1.28, at a temperature of 20°C and a residence time of 30 minutes. The prepolymeration yield is of about 180 g per gram of solid catalyst component.

A polypropylene slurry is continuously discharged from the loop reactor and is fed to the first fluidized bed reactor to carry out the polymerization step C) of the present invention.

### Polymerization - Step C)

In the first gas-phase reactor propylene was polymerized using H₂ as the molecular weight regulator and in the presence of propane as inert diluent. Ethylene as a comonomer was fed to this reactor. Make-up propane, propylene and hydrogen as molecular weight regulator were fed to this reactor. The polymerization was carried out at a temperature of 80°C and at a pressure of 2.0 MPa.

The composition of the gas phase in the fluidized bed reactor is specified in Table 1, as well as the production split (% wt) and some properties of the obtained semi-crystalline matrix. It can be seen from Table 1 that the polypropylene resin had a poured bulk density of 0.325 g/cm³ and a fraction soluble in xylene of 9.8% by weight. The split of the first polymerization reactor was 28% by weight.

### Polymerization - Step D)

In this polymerization step two different ethylene/propylene copolymers are produced in a sequence of two fluidized bed reactors, as shown in Fig. 1.

The operative conditions in the 2^{nd} and 3^{rd} gas-phase reactors were differentiated by operating these reactors with a different monomer concentration, in particular the ethylene/propylene ratio, as indicated in Table 2.

The rubbery copolymer obtained in the 2^{nd} reactor is characterized by solubility in xylene of 90% by weight, while the rubbery copolymer obtained in the 3^{rd} reactor is characterized by solubility in xylene of 60% by weight.

The heterophasic propylene copolymer deriving from the above sequential polymerization is continuously discharged from the second gas-phase reactor.

In Table 3 some structural properties (MIL, XS, IVXS, C₂H₄ content) and some specific properties (hardness, gloss) of this heterophasic copolymer are indicated. The produced copolymer is suitable to be used in flooring applications.

### Example 5

### Precontacting - Step A)

The same Ziegler-Natta catalyst system of Example 4 was used as the polymerization catalyst. The catalyst components were introduced into the pre-contacting vessel together with propylene, at a weight ratio propylene/sol.cat of 1.0. The above components were pre-contacted at a temperature of 20°C for 10 minutes.

### Prepolymerization - Step B)

The catalyst system withdrawn from the pre-contacting vessel was continuously fed to the prepolymerization loop reactor together with a liquid stream of propylene and propane. As shown in Table 1 the prepolymerization is performed at the same temperature of example 4, but modifying the C₃H₈C₃H₆ ratio at the value of 1.86.

A polypropylene slurry is continuously discharged from the loop reactor and is fed to the first fluidized bed reactor to carry out the polymerization step C) of the present invention.

### Polymerization - Step C)

In the first gas-phase reactor propylene was polymerized using H₂ as the molecular weight regulator and in the presence of propane as inert diluent. Ethylene as a comonomer was fed to this reactor. Make-up propane, propylene and hydrogen as molecular weight regulator were fed to this reactor. The polymerization was carried out at a temperature of 80°C and at a pressure of 2.0 MPa.

The composition of the gas phase in the fluidized bed reactor is specified in Table 1, as well as the production split (% wt) and some properties of the obtained semi-crystalline matrix. It can be seen from Table 1 that the polypropylene resin had a poured bulk density of 0.331 g/cm³ and a fraction soluble in xylene of 9.3% by weight. The split of the first polymerization reactor was 30% by weight.

As demonstrated by the comparison with Example 4, the other conditions being equal in step A) and B), an increase of the C₃H₈/C₃H₆ ratio in step B) leads to an increase of the poured bulk density of the semi-crystalline matrix prepared in step C).

The obtained semi-crystalline was continuously discharged from the first reactor, separated from propylene and propane by means of a gas/solid separator, and then introduced into a second fluidized bed reactor.

### Polymerization - Step D)

In this polymerization step two different ethylene/propylene copolymers are produced in a sequence of two fluidized bed reactors, as shown in Fig. 1.

The operative conditions in the 2^{nd} and 3^{rd} gas-phase reactors were differentiated by operating these reactors with a different monomer concentration, in particular the ethylene/propylene ratio, as indicated in Table 2.

The rubbery copolymer obtained in the 2^{nd} reactor is characterized by solubility in xylene of 87% by weight, while the rubbery copolymer obtained in the 3^{rd} reactor is characterized by solubility in xylene of 67 % by weight.

The heterophasic propylene copolymer deriving from the above sequential polymerization is continuously discharged from the second gas-phase reactor.

In Table 3 some structural properties (MIL, XS, IVXS, C₂H₄ content) and some specific properties (hardness, gloss) of this heterophasic copolymer are indicated. The produced copolymer is suitable to be used in flooring applications.

### EXAMPLE 6

### Precontacting - Step A)

The same Ziegler-Natta catalyst system of Example 4 was used as the polymerization catalyst with the difference that the weight ratio TEAL/DCPMS was of 10.

The catalyst components were introduced into the pre-contacting vessel together with propylene, at a weight ratio propylene/sol.cat of 0.7.

The above components were pre-contacted at a temperature of 20°C for 10 minutes.

### Prepolymerization - Step B)

The catalyst system withdrawn from the pre-contacting vessel was continuously fed to the prepolymerization loop reactor together with a liquid stream of propylene and propane. As shown in Table 1 the prepolymerization is performed at the same temperature and C₃H₈/C₃H₆ ratio of example 4.

A polypropylene slurry is continuously discharged from the loop reactor and is fed to the first fluidized bed reactor to carry out the polymerization step C) of the present invention.

### Polymerization - Step C)

In the first gas-phase reactor propylene was polymerized using H₂ as the molecular weight regulator and in the presence of propane as inert diluent. Make-up propane, propylene and hydrogen as molecular weight regulator were fed to this reactor. The polymerization was carried out at a temperature of 80°C and at a pressure of 2.0 MPa.

The composition of the gas phase in the fluidized bed reactor is specified in Table 1, as well as the production split (% wt) and some properties of the obtained semi-crystalline matrix. It can be seen from Table 1 that the polypropylene resin had a poured bulk density of 0.319 g/cm³ and a fraction soluble in xylene of 2.5% by weight. The split of the first polymerization reactor was 30% by weight.

As demonstrated by the comparison with Example 4, the other conditions being equal in step A) and B), a decrease of the C₃H₆/sol.cat. in step A) leads to a decrease of the poured bulk density of the semi-crystalline matrix prepared in step C).

The obtained semi-crystalline was continuously discharged from the first reactor, separated from propylene and propane by means of a gas/solid separator, and then introduced into a second fluidized bed reactor.

### Polymerization - Step D)

In this polymerization step two different ethylene/propylene copolymers are produced in a sequence of two fluidized bed reactors, as shown in Fig. 1.

The operative conditions in the 2^{nd} and 3^{rd} gas-phase reactors were differentiated by operating these reactors with a different monomer concentration, in particular the ethylene/propylene ratio, as indicated in Table 2.

The rubbery copolymer obtained in the 2^{nd} reactor is characterized by solubility in xylene of 90% by weight, while the rubbery copolymer obtained in the 3^{rd} reactor is characterized by solubility in xylene of 64% by weight.

The heterophasic propylene copolymer deriving from the above sequential polymerization is continuously discharged from the second gas-phase reactor.

In Table 3 some structural properties (MIL, XS, IVXS, C₂H₄ content) and some mechanical properties (IZOD -50°C, flexural modulus) of this heterophasic copolymer are indicated. The produced copolymer is suitable to be used as impact modifier in the automotive field.

**TABLE 1**

| | **Operative conditions Step A)** | | **Operative conditions Step B)** | | **Operative conditions Step C)** | | | | **Split (wt%)** | **Properties of the semi-crystalline matrix** | | | |
|---|---|---|---|---|---|---|---|---|---|---|---|---|---|
| | T(°C) | C₃H₆/sol.cat. | T(°C) | C₃H₈/C₃H₆ | H₂ | C₃H₆ | C₃H₈ | C₂H₄ | | PBD | MIL | XS | C₂H₄ |
| | | | | | %mol | %mol | %mol | content %mol | | glcm³ | dg/min | wt% | %wt |
| Example 1 | 25 | 1 | 20 | 1.28 | 0.2 | 54.8 | 45.0 | - | 60 | 0.322 | 4.3 | 2.3 | - |
| Example 2 | 15 | 1 | 20 | 1.28 | 2.3 | 57.7 | 40.0 | - | 70 | 0.340 | 44.0 | 2.0 | - |
| Example 3 | 25 | 0.5 | 20 | 1.28 | 2.6 | 57.4 | 40.0 | - | 50 | 0.312 | 50.0 | 2.0 | - |
| Example 4 | 20 | 1 | 20 | 1.28 | 1.7 | 16.2 | 81.53 | 0,57 | 28 | 0.325 | 52.5 | 9.8 | 3.6 |
| Example 5 | 20 | 1 | 20 | 1,86 | 1.9 | 17.0 | 80.58 | 0,52 | 30 | 0.331 | 50.0 | 9.3 | 3.3 |
| Example 6 | 20 | 0.7 | 20 | 1,28 | 7.0 | 33.0 | 60.0 | - | 30 | 0.319 | 144 | 2.5 | |

**Table 2 - Polymerization Step D)**

| | **Example 1** | **Example 2** | **Example 3** | **Example 4** | **Example 5** | **Example 6** |
|---|---|---|---|---|---|---|
| **Operative conditions - 2^{nd} reactor** | | | | | | |
| Temperature (°C) | 60 | 75 | 75 | 65 | 65 | 65 |
| Pressure (MPa) | 1.7 | 1.8 | 1.8 | 1.8 | 1.8 | 1.6 |
| H₂ (mol%) | - | 3.85 | 4.2 | 0.19 | 0.21 | 1.46 |
| C₃H₆ (mol%) | 22.3 | 16.45 | 19.5 | 47.27 | 50 | 30.44 |
| C₃H₈(mol%) | 73.15 | 60.87 | 58.3 | 44.75 | 41.32 | 60.0 |
| C₂H₄ (mol%) | 4.55 | 18.83 | 18 | 7.79 | 8.47 | 8.1 |
| H₂/C₂H₄ (mol ratio) | - | 0.234 | 0.233 | 0.0244 | 0.0248 | 0.18 |
| C₂H₄ / ₍C₂H₄+ C₃H₆) (mol ratio) | 0.169 | 0.466 | 0.48 | 0.142 | 0.149 | 0.21 |

| **Operative conditions - 3^{rd} reactor** | | | | | | |
|---|---|---|---|---|---|---|
| Temperature (°C) | | | | 65 | 65 | 65 |
| Pressure (MPa) | | | | 1.8 | 1.8 | 1.8 |
| H₂ (mol%) | | | | 3.22 | 3.4 | 5.8 |
| C₃H₆ (mol%) | | | | 35.14 | 35.0 | 27.6 |
| C₃H₈ (mol%) | | | | 26.04 | 24.7 | 30.0 |
| C₂H₄ (mol%) | | | | 35.6 | 36.9 | 36.6 |
| H₂ / C₂H₄ (mol ratio) | | | | 0.0904 | 0.092 | 0.158 |
| C₂H₄ / (C₂H₄+ C₃H₆) (mol ratio) | | | | 0.503 | 0.513 | 0.570 |

**Table 3 - Final copolymer**

| | MIL (dg/min) | XS (wt%) | IVXS (dl/g) | C₂H₄ (wt%) | IZOD at -50°C (kJ/m²) | IZOD at 23°C (kJ/m²) | Flexural Modulus (MPa) | Longitudinal Shrinkage (%) | Transversal Shrinkage (%) | Hardness Shore D (°) | Gloss (60°) (‰) | Stress Whitening |
|---|---|---|---|---|---|---|---|---|---|---|---|---|
| Example 1 | 0.52 | 28.4 | 7 | 10.1 | | 70 | 900 | | | | | |
| Example 2 | 13.7 | 25.3 | 2.2 | 21.0 | | 50 | 1100 | 0,75 | 0,90 | | | |
| Example 3 | 6.9 | 41.0 | 2.2 | 16.1 | | 60 | 1000 | 0,80 | 0,97 | | | |
| Example 4 | 0.37 | 55.2 | 4.0 | 36.6 | | | | | | 30 | 80 | Absent |
| Example 5 | 0.36 | 55.0 | 3.9 | 35.4 | | | | | | 25 | 40 | Absent |
| Example 6 | 2.5 | 53.0 | 2.7 | 38.4 | 25 | | 250 | | | | | |

## Claims

1. A polymerization process for preparing heterophasic propylene copolymers in two or more gas-phase reactors connected in series, in the presence of a polymerization catalyst comprising a catalytic component based on a titanium compound supported on magnesium halide, the process comprising the following steps;
A) contacting said catalytic component with an organo-Aluminum compound, optionally an external donor compound, optionally in the presence of propylene, at a temperature from 5°C to 30°C and a weight ratio propylenel(catalytic component) ranging from 0 to 2.0;
B) prepolymerizing the catalyst from A) with propylene, optionally in the presence of an inert hydrocarbon solvent;
C) polymerizing propylene, optionally with an another α-olefin comonomer in an amount lower than 15% by weight, to prepare a semicrystalline polymer component;
D) successively copolymerizing two or more alpha-olefin comonomers C₂-C₁₀ to prepare one or more olefin copolymers having a solubility in xylene higher than 15% by weight;
in which process the poured bulk density of the semi-crystalline component of step C) is adjusted at a value lower than 0.40 g/cm³ selecting the operative conditions in step A) in such a way that:
- the poured bulk density of said semi-crystalline matrix is decreased by increasing the temperature in step A);
- the poured bulk density of said semi-crystalline matrix is decreased by decreasing said weight ratio propylene/(catalytic component) in step A).

2. The process according to claim 1, wherein the poured bulk density of said semi-crystalline component is adjusted in a range from 0.25 g/cm³ to 0.35 g/cm³.

3. The process according to claim 1, wherein the weight ratio (hydrocarbon solvent)/propylene in step B) ranges from 0 to 7.0.

4. The process according to claim 1, wherein in step A) the temperature ranges from 10 to 25C°.

5. The process according to claim 1, wherein in step A) the propylene/(catalytic component) ratio ranges from 0.5 to 1.3.

6. The process according to claim 1, wherein in step A) said external electron donor is selected from alcohols, glycols, esters, ketones, amines, amides, nitriles, alkoxysilanes and ethers.

7. The process according to claim 1, wherein step B) is carried out in a loop reactor or in a sequence of two loop reactors.

8. The process according to claim 1, wherein the inert hydrocarbon solvent of step b) is propane.

9. The process according to claim 1, wherein the temperature in step B) ranges from 10 to 40°C.

10. The process according to claim 1, wherein step C) and D) are carried out in a sequence of two or more fluidized bed reactors.

11. The process according to claim 1, wherein the semi-crystalline polypropylene component of step C) has a solubility in xylene at ambient temperature lower than 10% by weight.

12. The process according to claim 1, wherein in step D) said olefin copolymers with a solubility in xylene higher than 15% by weight are selected from:
- copolymers of ethylene/propylene, ethylene/l -butene, ethylene/1-hexene;
- copolymers of propylene/1-butene, propylene/1-hexene;
- terpolymers of ethylene, propylene and a α-olefin C₄-C₁₂.

## Patentansprüche

1. Polymerisationsverfahren zur Herstellung heterophasischer Propylencopolymere in zwei oder mehr in Reihe geschalteten Gasphasenreaktoren in Gegenwart eines Polymerisationskatalysators, der eine katalytische Komponente umfasst, die auf einer auf Magnesiumhalogenid geträgerten Titanverbindung basiert, wobei das Verfahren die folgenden Schritt umfasst:
A) Inkontaktbringen der katalytischen Komponente mit einer aluminiumorganischen Verbindung, optional einer externen Donatorverbindung, optional in Gegenwart von Propylen, bei einer Temperatur von 5°C bis 30°C und einem Gewichtsverhältnis Propylen/(katalytische Komponente) im Bereich von 0 bis 2,0;
B) Vorpolymerisieren des Katalysators von A) mit Propylen, optional in Gegenwart eines inerten Kohlenwasserstofflösungsmittels;
C) Polymerisieren von Propylen, optional mit einem weiteren α-Olefin-Comonomer in einer Menge von weniger als 15 Gew.-%, um eine semikristalline Polymerkomponente herzustellen;
D) nacheinander Copolymerisieren von zwei oder mehr α-Olefin-Comonomeren C₂-C₁₀, um ein oder mehrere Olefincopolymere mit einer Löslichkeit in Xylol höher als 15 Gew.-% herzustellen;
wobei bei dem Verfahren die Schüttdichte der semikristallinen Komponente von Schritt C) auf einen Wert niedriger als 0,40 g/cm³ eingestellt wird, wobei die Betriebsbedingungen in Schritt A) so ausgewählt werden, dass:
- die Schüttdichte der semikristallinen Matrix durch Erhöhen der Temperatur in Schritt A) herabgesetzt wird;
- die Schüttdichte der semikristallinen Matrix durch Herabsetzen des Gewichtsverhältnisses Propylen/(katalytische Komponente) in Schritt A) herabgesetzt wird.

2. Verfahren nach Anspruch 1, wobei die Schüttdichte der semikristallinen Komponente in einem Bereich von 0,25 g/cm³ bis 0,35 g/cm³ eingestellt wird.

3. Verfahren nach Anspruch 1, wobei das Gewichtsverhältnis (Kohlenwasserstofflösungsmittel)/Propylen in Schritt B) im Bereich von 0 bis 7,0 liegt.

4. Verfahren nach Anspruch 1, wobei die Temperatur in Schritt A) im Bereich von 10 bis 25°C liegt.

5. Verfahren nach Anspruch 1, wobei das Verhältnis Propylen/(katalytische Komponente) in Schritt A) im Bereich von 0,5 bis 1,3 liegt.

6. Verfahren nach Anspruch 1, wobei der externe Elektronendonator in Schritt A) aus Alkoholen, Glycolen, Estern, Ketonen, Aminen, Amiden, Nitrilen, Alkoxysilanen und Ethern ausgewählt ist.

7. Verfahren nach Anspruch 1, wobei Schritt B) in einem Schlaufenreaktor oder in einer Folge von zwei Schlaufenreaktoren durchgeführt wird.

8. Verfahren nach Anspruch 1, wobei das inerte Kohlenwassserstofflösungsmittel von Schritt b) Propan ist.

9. Verfahren nach Anspruch 1, wobei die Temperatur in Schritt B) im Bereich von 10 bis 40°C liegt.

10. Verfahren nach Anspruch 1, wobei Schritt C) und D) in einer Folge von zwei oder mehr Wirbelschichtreaktoren durchgeführt werden.

11. Verfahren nach Anspruch 1, wobei die semikristalline Polypropylenkomponente von Schritt C) eine Löslichkeit in Xylol bei Umgebungstemperatur niedriger als 10 Gew.-% hat.

12. Verfahren nach Anspruch 1, wobei in Schritt D) die Olefincopolymere mit einer Löslichkeit in Xylol höher als 15 Gew.-% ausgewählt sind aus:
- Copolymeren von Ethylen/Propylen, Ethylen/1-Buten, Ethylen/1-Hexen;
- Copolymeren von Propylen/1-Buten, Propylen/1-Hexen;
- Terpolymeren von Ethylen, Propylen und einem α-Olefin C₄-C₁₂.

## Revendications

1. Procédé de polymérisation pour la préparation de copolymères de propylène hétérophasiques dans deux ou plus de deux réacteurs à phase gazeuse raccordés en série, en présence d'un catalyseur de polymérisation comprenant un composant catalytique à base d'un composé de titane supporté sur un halogénure de magnésium, le procédé comprenant les étapes suivantes :
A) la mise en contact dudit composant catalytique avec un composé organique de l'aluminium, éventuellement un composé donneur externe, éventuellement en présence de propylène, à une température de 5°C à 30°C et à un rapport pondéral propylène/(composant catalytique) dans la plage de 0 à 2,0 ;
B) la prépolymérisation du catalyseur de A) avec du propylène, éventuellement en présence d'un solvant hydrocarboné inerte ;
C) la polymérisation du propylène, éventuellement avec un autre comonomère α-oléfinique en une quantité inférieure à 15% en poids, pour préparer un composant polymère semi-cristallin ;
D) la copolymérisation successive de deux ou de plus de deux comonomères alpha-oléfiniques en C₂-C₁₀ pour préparer un ou plusieurs copolymères oléfiniques présentant une solubilité dans le xylène supérieure à 15% en poids ;
dans lequel procédé la densité apparente du composant semi-cristallin de l'étape C) est ajustée à une valeur inférieure à 0,40 g/cm³ en choisissant les conditions opératoires dans l'étape A) de manière telle que :
- la densité apparente de ladite matrice semi-cristalline est diminuée en augmentant la température dans l'étape A) ;
- la densité apparente de ladite matrice semi-cristalline est diminuée en diminuant ledit rapport pondéral propylène/(composant catalytique) dans l'étape A).

2. Procédé selon la revendication 1, où la densité apparente dudit composant semi-cristallin est ajustée dans une plage de 0,25 g/cm³ à 0,35 g/cm³.

3. Procédé selon la revendication 1, où le rapport pondéral (solvant hydrocarboné)/propylène dans l'étape B) est dans la plage de 0 to 7,0.

4. Procédé selon la revendication 1, où, dans l'étape A), la température est dans la plage de 10 à 25C°.

5. Procédé selon la revendication 1, où, dans l'étape A), le rapport propylène/(composant catalytique) est dans la plage de 0,5 à 1,3.

6. Procédé selon la revendication 1, où, dans l'étape A), ledit donneur d'électrons externe est choisi parmi les alcools, les glycols, les esters, les cétones, les amines, les amides, les nitriles, les alcoxysilanes et les éthers.

7. Procédé selon la revendication 1, où l'étape B) est réalisée dans un réacteur en boucle ou dans une séquence de deux réacteurs en boucle.

8. Procédé selon la revendication 1, où le solvant hydrocarboné inerte de l'étape B) est le propane.

9. Procédé selon la revendication 1, où dans l'étape B) la température est dans la plage de 10 à 40°C.

10. Procédé selon la revendication 1, où les étapes C) et D) sont réalisées dans une séquence de deux ou de plus de deux réacteurs à lit fluidisé.

11. Procédé selon la revendication 1, où le composant semi-cristallin de polypropylène de l'étape C) présente une solubilité dans le xylène à température ambiante inférieure à 10% en poids.

12. Procédé selon la revendication 1, où, dans l'étape D), lesdits copolymères oléfiniques avec une solubilité dans le xylène supérieure à 15% en poids sont choisis parmi :
- les copolymères d'éthylène/propylène, d'éthylène/1-butène, d'éthylène/1-hexène ;
- les copolymères de propylène/1-butène, de propylène/1-hexène ;
- les terpolymères d'éthylène, de propylène et d'une α-oléfine en C₄-C₁₂.
